# EUROPEAN PATENT SPECIFICATION

(11) **EP 2 118 609 B1**
(45) Date of publication and mention of the grant of the patent: **01.07.2015**
(21) Application number: 08712469.9
(22) Date of filing: 12.02.2008
(51) Int. Cl.: F28D 9/00, F28F 3/04, F24F 12/00

(54) **HEAT EXCHANGER FOR VENTILATION SYSTEM**
WÄRMETAUSCHER FÜR LÜFTUNGSSYSTEM
ECHANGEUR THERMIQUE POUR SYSTÈME DE VENTILATION

(30) Priority: 09.03.2007 KR 20070023447
(43) Date of publication of application: 18.11.2009
(73) Proprietor: AIR-TECH Co., Ltd., Daejeon 306-754 (KR)
(72) Inventor: YOO, Seong-Yeon, Daejeon 302-791 (KR); KIM, Jin-Hyeok, Daejeon 305-755 (KR)
(74) Representative: Habermann, Gert
(86) International application number: PCT/KR2008/000822
(87) International publication number: WO 2008/111732

(56) References cited:
- EP-B1- 0 597 778
- EP-B1- 0 597 778
- BE-A7- 1 003 417
- KR-A- 20060 026 754
- US-A1- 2006 196 649
- US-B2- 7 258 162

## Description

### Technical Field

The present invention relates to a heat exchanger for a ventilation system, and more particularly, a heat exchanger for a ventilation system, which introduces outside air to the inside by primarily cooling/heating the air flowing from the outside, using cool/ warm energy being likely to be lost when discharging inside air to the outside and which generates heat exchange in the middle of each of an air exhaust duct and an air supply duct which are positioned at both sides of the heat exchanger in a length direction of the ducts, comprising: a first heat transfer plate and a second heat transfer plate, wherein a number of the first heat transfer plates and a number of the second heat transfer plates are stacked alternately, so that a first combining projection and a second combining projection formed at each of edges of front and back sides of the first heat transfer plate are respectively combined with a corresponding first combining groove and a second combining groove of the second heat transfer plate, and so that a first closing groove formed at each of first sloping ends of left and right sides of the first heat transfer plate is combined with a first closing projection formed at each of first sloping ends of left and right sides of the second heat transfer plate, or a second closing projection formed at each of second sloping ends of left and right sides of the first heat transfer plate is combined with a second closing groove formed at each of second sloping ends of the left and right sides of the second heat transfer plate, thereby forming an inlet/outlet for introducing/discharging the cold/hot air at the sloping ends where the first heat transfer plate and the second heat transfer plate are not combined with each other, so that thermal energy included in the discharged air is transferred to the introduced air so as to be used for primarily cooling/heating the introduced air, to save energy.

### Background Art

As time goes by, the level of carbon dioxide present in inside air of a building increases but the level of residual oxygen decreases. Moreover, the inside air is contaminated by artificially generated odors, dust and the like.

To maintain fresh inside air and pleasant environments in a building, fresh outside air needs to be periodically supplied to the inside of the building. Generally, for ventilation of inside air of a building, a ventilation system needs to be used for discharging contaminated inside air to the outside of the building and introducing fresh outside air to the inside of the building, or windows and the like of the building need to be artificially opened.

A conventional ventilation system for a building includes an air supply duct and an air exhaust duct. In the conventional ventilation system, ventilation is performed by introducing outside air and discharging inside air through the ducts.

When the conventional ventilation system is used for ventilation, since inside air with high thermal energy is released to the outside of a building, and outside air with low thermal energy is introduced to the inside, it wastes a great quantity of thermal energy.

An appropriate temperature for the life of human is about 20°C. Therefore, generally, an inside temperature is maintained as about 20°C, regardless of wintertime or summertime. However, when an outside temperature is 0°C at wintertime, there is a temperature difference of about 20°C between the outside temperature and the inside temperature. Further, when an outside temperature is 30°C at summertime, there is a temperature difference of about 10°C between the outside temperature and the inside temperature.

When a temperature difference between an inside temperature and an outside temperature is big at wintertime or summertime, inside air with high thermal energy for heating/cooling is discharged to the outside as it is. Then, outside air with low thermal energy to be introduced to the inside needs other thermal energy for heating/ cooling the outside air. Consequently, the conventional ventilation system wastes thermal energy.

In other words, when contaminated inside air is discharged to the outside at summertime, the inside air relatively colder than the outside air is released. Then, to supply fresh cool air to the inside, it is necessary to decrease a temperature of hot outside air to be introduced as much as the released cold air, by using an air cooling apparatus, such as an air conditioner and the like. To the contrary, when contaminated inside air is discharged to the outside at wintertime, the inside air relatively warmer than the outside air is released. Then, to supply fresh warm air to the inside, it is necessary to increase a temperature of cold outside air to be introduced as much as the released warm air, by using a heater and the like or controlling an inside temperature of a building to be higher by using a thermostat of the heater.

Therefore, the conventional ventilation system has the problem in that heat loss is inevitably caused when exchanging air. Considering this problem, a heat exchanger needs to be developed to save energy required for heating/cooling the supplied air, by transferring thermal energy included in the exhausted air to the supplied air.

For example, from BE 1 003 417 A7 a heat exchanger for a ventilation system, in which heat exchange is performed between the exhaust duct and the air supply duct, according to the features of the preamble of claim 1 is known.

### Disclosure of Invention

### Technical Problem

Therefore, the present invention has been made to solve the above problems, and it is an object of the present invention to provide a heat exchanger for a ventilation system, which introduces outside air to the inside by primarily cooling/heating the air and which generates heat exchange in the middle of each of an air exhaust duct and an air supply duct which are positioned at both sides of the heat exchanger, comprising: a first heat transfer plate and a second heat transfer plate, wherein a number of the first heat transfer plates and a number of the second heat transfer plates are stacked alternately by fitting each first combining projection of the first heat transfer plate into each first combining groove of the second heat transfer plate, fitting each second combining projection of the first heat transfer plate into each second combining groove of the second heat transfer plate and forming a sloping end at each of left and right sides of the first and second heat transfer plates so that an inlet/outlet for introducing/ discharging cold/hot air is formed at, alternating first sloping ends or second sloping ends end, thereby primarily cooling/heating introduced air, using cool/warm thermal energy being likely to be lost when discharging inside air.

### Technical Solution

A heat exchange according to the invention has the features of claim 1.

The heat exchanger may further comprise: a number of guide bars formed on the top surface of the sides where the cold/hot air is introduced/discharged in each of the first heat transfer plate and the second heat transfer plate, the guide bars guiding a direction of the cold/hot air; and a number of irregular dimples formed to protrude upward and spaced apart from one another on the surface of the middle part of each of the first heat transfer plate and the second heat transfer plate.

The heat exchanger may further comprise: a number of coupling holes bored on the first heat transfer plate and spaced apart from one another; a number of coupling protrusions protruding upward on the second heat transfer plate so as to respectively correspond to the coupling holes under and/or on the first heat transfer plate, each coupling protrusion having its hollow inside; and a number of coupling bolts respectively passing through the coupling holes and the coupling protrusions so as to fasten a number of the stacked first and second heat transfer plates and when the first heat transfer plates and the second heat transfer plates are correspondingly stacked alternately.

### Advantageous Effects

As described above, in the heat exchanger for a ventilation system which introduces outside air to the inside by primarily cooling/heating the air and which generates heat exchange in the middle of each of an air exhaust duct and an air supply duct which are positioned at both sides of the heat exchanger, the heat exchanger comprises the first heat transfer plate and the second heat transfer plate, wherein a number of the first heat transfer plates and a number of the second heat transfer plates are stacked alternately by fitting each first combining projection of the first heat transfer plate into each first combining groove of the second heat transfer plate, fitting each second combining projection of the first heat transfer plate into each second combining groove of the second heat transfer plate, and forming the sloping end at each of left and right sides of the first and second heat transfer plates. Accordingly, since the inlet/outlet for introducing/discharging cold/hot air is formed at, alternating first sloping ends or second sloping ends end, the heat exchanger is capable of primarily cooling/heating introduced air by using cool/warm thermal energy being likely to be lost when discharging inside air. Consequently, the heat exchanger has the effect of saving energy.

### Brief Description of the Drawings

In the accompanying drawings:
FIG. 1 is a perspective view of a first heat transfer plate according to an embodiment of the present invention;
FIG. 2 illustrates sectional views taken along with Lines A-A, B-B and C-C of FIG. 1;
FIG. 3 is a perspective view of a second heat transfer plate according to another embodiment of the present invention;
FIG. 4 illustrates sectional views taken along with Lines A'-A', B'-B' and C'-C' of FIG. 3;
FIG. 5 is a perspective view of a combination structure of a heat exchanger according to another embodiment of the present invention;
FIG. 6 illustrates sectional views taken along with Lines A"-A", B"-B" and C"-C" of FIG. 5; and
FIG. 7 is a perspective view of a heat exchanger for a ventilation system according to another embodiment of the present invention.

### Explanation on essential elements of drawings

10: first heat transfer plate 11: first combining projection
12: second combining projection 13: first closing groove
14: second closing projection 20: second heat transfer plate
21: first combining groove 22: second combining groove
23: first closing projection 24: second closing groove
30: heat exchanger 40: guide bars
41: irregular dimples 50: inlet/outlet
60: air exhaust duct 61: air supply duct
70: coupling holes 71: coupling protrusions
100: base level 200: projection

### Best Mode for Carrying Out the Invention

The present invention will now be described more fully hereinafter with reference to the accompanying drawings, in which preferred embodiments of the invention are shown.

It will be understood that words or terms used in the specification and claims shall not be interpreted as the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.

The present invention may be embodied in different forms and should not be construed as limited to the embodiments set forth herein. Rather, these embodiments are provided as teaching examples of the invention. Therefore, it will be understood that the scope of the invention is intended to include various modifications and alternative arrangements within the capabilities of persons skilled in the art using presently known or future technologies and equivalents.

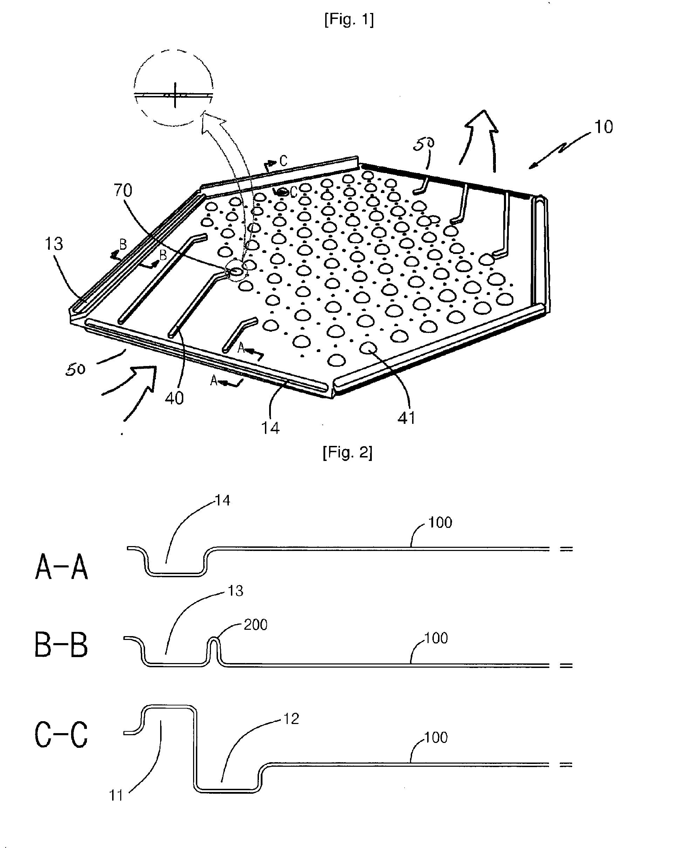

A heat exchanger 30 for a ventilation system according to a preferred embodiment of the present invention will be described with reference to FIGS. 1 through 7.

As illustrated, the heat exchanger 30 comprises a first heat transfer plate 10 and a second heat transfer plate 20, wherein a number of the first heat transfer plates 10 and a number of the second heat transfer plates 20 are stacked alternately. The heat exchanger 30 uses warm/cool air being likely to be lost when discharging inside air to the outside, as heating/cooling energy for primarily heating/cooling cold/hot outside air when introducing the air to the inside for ventilation.

FIG. 1 is a perspective view of the first heat transfer plate 10 according to an embodiment of the present invention, and FIG. 2 illustrates sectional views of Lines A-A, B-B and C-C of FIG. 1. The first heat transfer plate 10 has a hexagonal shape as illustrated in FIG. 1.

In the first heat transfer plate 10, for explanation, the side where sectional line C-C is taken is called a 'front side', its opposing side is a 'back side', the sides where sectional lines B-B and A-A are taken are called 'left sides' and their opposing sides are 'right sides'. The left and right sides have their respective sloping ends. Among the two left sides, the sloping end of the side where sectional line B-B is taken is called a 'first sloping end' and that of the side where sectional line A-A is taken is called a 'second sloping end'. Accordingly, the sloping end of one of the right sides, which opposes to the first sloping end of the left side, is called a 'first sloping end' and the sloping end of the other, which opposes to the second sloping end of the left side, is called a 'second sloping end'. That is, the right sides are symmetrical with the left sides.

It will be understood that, although the terms, first and second, are used herein to describe the sloping ends, these sloping ends should not be limited by these terms. These terms are only used to distinguish one end from the other. For example, a first sloping end could be termed a second sloping end, and, similarly, a second sloping end could be termed a first sloping end, without departing from the scope of the present invention.

The first heat transfer plate 10 comprises: a first combining projection 11, a second combining projection 12, a first closing groove 13, and a second closing projection 14.

As illustrated in FIGS. 1 and 2, the first combining projection 11 is formed at an edge of each of the front and back sides of the first heat transfer plate 10 which is manufactured using a flat panel. The first combining projection 11 is spaced apart from a horizontal edge of the flat panel, at a predetermined distance, and protrudes upward from a base level 100 so as to be relatively higher than a projection 200. The second combining projection 12 is formed inward the first combining projection 11. The second combining projection 12 is shaped by being hollowed out downward from the base level 100.

Further, the left sides and the right sides of the first heat transfer plate 10 have their respective sloping ends. For clarity, the sloping end of the left side where sectional line B-B is taken is called the first sloping end and that of the left side where sectional line A-A is taken is called the second sloping end. Their respective opposing sloping ends in the right sides are called the first sloping end and the second sloping end. As illustrated in FIGS. 1 and 2, the horizontal edge and the projection 200 are formed at an edge of each of the first sloping ends in the left and right sides. The horizontal edge protrudes upward from the base level 100. The projection 200 is spaced apart from the horizontal edge, at a predetermined distance, and protrudes upward from the horizontal edge. The first closing groove 13 is formed by the horizontal edge and the projection 200 and has a shape hollowed out lengthwise. The second closing projection 14 is formed at an edge of each of the second sloping ends in the left and right sides. The second closing projection 14 is spaced apart from the horizontal edge, at a predetermined distance, and is shaped by being hollowed out downward from the base level 100.

An inlet/outlet 50 is formed around the place where each second closing projection 14 is formed at each second sloping end. The inlet/outlet 50 will be described later.

A number of irregular dimples 41 are formed at the middle of the top surface of the first heat transfer plate 10. The irregular dimples 41 are spaced apart from one another, at a predetermined distance, and protrude upward. A number of guide bars 40 are formed at the side where the second closing projection 14 is formed and the inlet/outlet 50 is formed. The guide bars 40 are formed in a direction of air flow.

The irregular dimples 41 and the guide bars 40 are formed in the second heat transfer plate 20, which will be described later. The direction of air flow includes a direction in which air is introduced from a first side and discharged to a second side and/or a direction in which air is introduced from the second side and discharged to the first side.

Plastic is used as a material for the first heat transfer plate 10. However, the material may vary at a user's discretion.

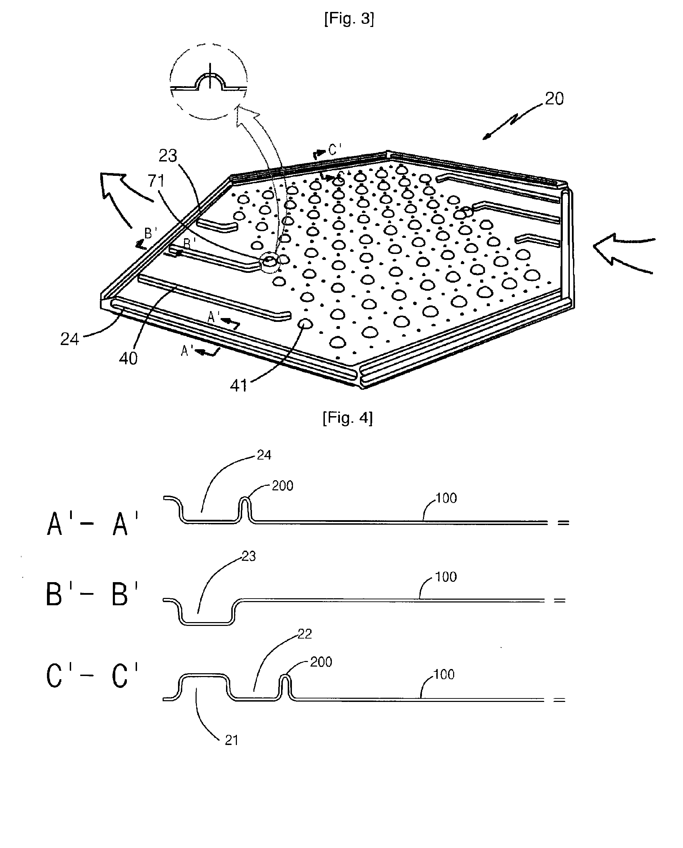

FIG. 3 is a perspective view of the second heat transfer plate 20 according to another embodiment of the present invention, and FIG. 4 illustrates sectional views of Lines A'-A', B'-B' and C'-C' of FIG. 3. Like the first heat transfer plate 10, the second heat transfer plate 20 has a hexagonal shape as illustrated in FIG. 3. In this embodiment, the terms, such as a front side, a back side, left sides, right sides, first sloping ends and second sloping ends, are used in the same manner as those used for the first heat transfer plate 10.

The second heat transfer plate 20 comprises: a first combining groove 21, a second combining groove 22, a first closing projection 23, and a second closing groove 24.

As illustrated in FIGS. 3 and 4, the first combining groove 21 is formed at an edge of each of the front and back sides of the second heat transfer plate 20 which is manufactured using a flat panel. The first combining groove 21 is spaced apart from a horizontal edge of the flat panel, at a predetermined distance, and protrudes upward from a base level 100 so as to be relatively higher than a projection 200. The projection 200 is formed inward the first combining groove 21 at a predetermined distance. Therefore, the second combining groove 22 is formed between the first combining groove 21 and the projection 200.

Further, the left sides and the right sides of the second heat transfer plate 20 have their respective first and second sloping ends. As illustrated in FIGS. 3 and 4, the first closing projection 23 is formed at an edge of each of the first sloping ends in the left and right sides. The first closing projection 23 is spaced apart from the horizontal edge, at a predetermined distance, and is shaped by being hollowed out downward from the base level 100. The horizontal edge and the projection 200 are formed at an edge of each of the second sloping ends in the left and right sides. The horizontal edge protrudes upward from the base level 100. The projection 200 is spaced apart from the horizontal edge, at a predetermined distance, and protrudes upward from the horizontal edge. Therefore, the second closing groove 24 is formed by the horizontal edge and the projection 200 therebetween.

The second heat transfer plate 20 is stacked on the first heat transfer plate 10, to be combined with each other. The heat exchanger 30 according to the embodiment of the present invention is formed by stacking a number of the first heat transfer plates 10 and a number of the second heat transfer plates 20 alternately. For example, two second heat transfer plates 20 are each placed under and on the first heat transfer plate 10. In other words, for example, two first heat transfer plates 10 are each placed under and on the second heat transfer plate 20. The combination of the first heat transfer plates 10 and the second heat transfer plates 20 will be described later.

Like the first heat transfer plate 10, plastic is used as a material of the second heat transfer plate 20. However, the material may vary at a user's discretion.

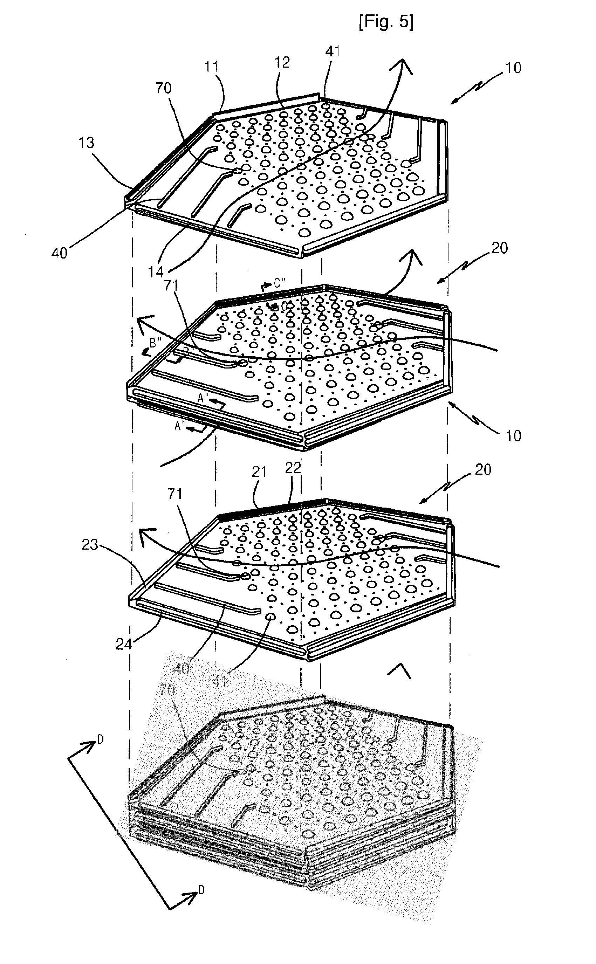

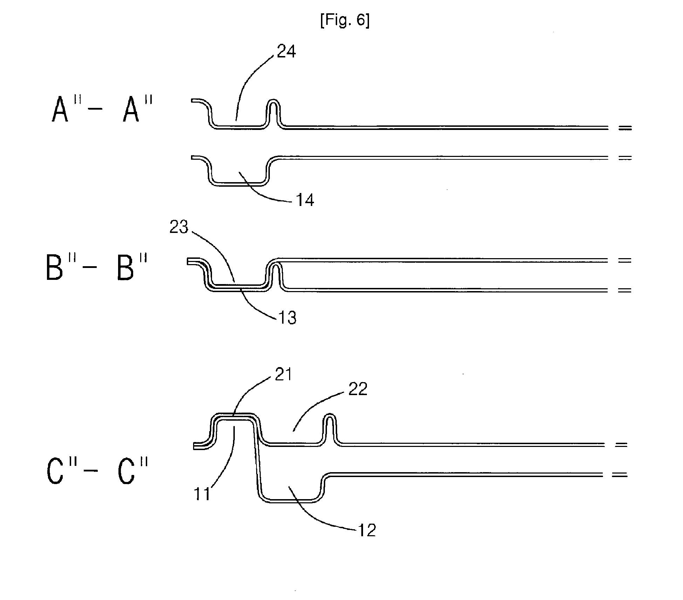

FIG. 5 is a perspective view of a combination structure of the heat exchanger 30 according to the present invention, and FIG. 6 illustrates sectional views taken along with Lines A"-A", B"-B" and C"-C" of FIG. 5. As illustrated in FIGS. 5 and 6, the heat exchanger 30 is formed by stacking a number of the first heat transfer plates 10 and a number of the second heat transfer plates 20 alternately. The first heat transfer plate 10 and the second heat transfer plate 20 are correspondingly combined with each other.

When the second heat transfer plate 20 is placed on the first heat transfer plate, to be combined with each other, the first combining projection 11 formed at each of the front and back sides of the first heat transfer plate 10 is fitted into the first combining groove 21 formed at each of the front and back sides of the second heat transfer plate 20, so that the edges of the front and back sides of the first and second heat transfer plates 10 and 20 are closed. Further, the first closing projection 23, formed at each of the first sloping ends of the left and right sides of the second heat transfer plate 10, is fitted into the first closing groove 13, formed at each of the first sloping ends of the left and right sides of the first heat transfer plate 10, so that the first sloping ends are closed to block air flow. Then, the inlet/outlet 50 is formed at the second sloping ends where the first and second heat transfer plates 10 and 20 are not combined with each other, so that air is introduced and discharged through the inlet/outlet 50.

When the second heat transfer plate 20 is placed under the first heat transfer plate 10, to be combined with each other, the second combining projection 12 formed at each of the front and back sides of the first heat transfer plate 10 is fitted into the second combining groove 22 formed at each of the front and back sides of the second heat transfer plate 20, so that the edges of the front and back sides of the first and second heat transfer plates 10 and 20 are closed. Further, the second closing projection 14 formed at each of the second sloping ends the left and right sides of the first heat transfer plate 10 is fitted into the second closing groove 24 formed at each of the second sloping ends of the left and right sides of the second heat transfer plate 20, so that the second sloping ends are closed to block air flow, unlike the case where the second heat transfer plate 20 is combined with the first heat transfer plate 10 on the first heat transfer plate 10.

Therefore, the inlet/outlet 50 is formed at the first sloping ends where the first and second heat transfer plates 10 and 20 are not combined with each other, so that air is introduced and discharged through the inlet/outlet 50.

That is, when the first heat transfer plates 10 and the second heat transfer plates 20 are alternately stacked in the form of multilayer, the inlet/outlet 50 is formed at, alternating the first sloping ends and the second sloping ends. Further, when the first sloping ends are connected to an air supply duct 61 and the second sloping ends are connected to an air exhaust duct 60. When the first sloping ends are connected to the air exhaust duct 60, the second sloping ends are connected to the air supply duct 61.

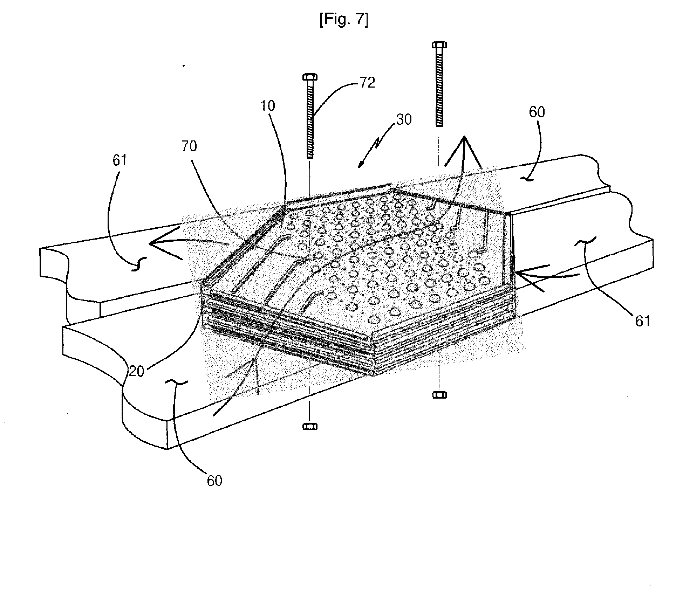

FIG. 7 is a perspective view of the heat exchanger for the ventilation system according to another embodiment of the present invention. As illustrated in FIG. 7, both of the air exhaust duct 60 and the air supply duct 61 are operatively positioned at both sides of the heat exchanger 30 comprising a number of the first heat transfer plates 10 and a number of the second heat transfer plates 20.

In FIG. 7, arrows indicate the directions of air flow. As illustrated, air flowing through the air exhaust duct 60 and air flowing through the air supply duct 61 cross each other. Heat exchange is performed while the air flowing through the air exhaust duct 60 and the air flowing through the air supply duct 61 cross each other.

The positions of the air supply duct 61 and the air exhaust duct 60 may vary at a user's discretion, unlike those of FIG. 7. Further, the air flow indicated by the arrows may be reversibly used.

Further, a number of coupling holes 70 are bored on the first heat transfer plate 10, and a number of coupling protrusions 71 corresponding to the coupling holes 70 are formed on the second heat transfer plate 20. When a number of the first and second heat transfer plates 10 and 20 are stacked, a number of coupling bolts 72 are used to fix the first and second heat transfer plates 10 and 20. Each coupling member 72 passes through each coupling hole 70 formed on each first heat transfer plate 10 and each coupling protrusion 71 formed on each second heat transfer plate 20, to be combined with one another.

The coupling protrusion 71 protrudes upward and its inside is hollow so as to receive the coupling member 72. In the present invention, the coupling member 72 uses a bolt and a nut. However, the coupling member may be replaced with any members that are capable of securing the first and second heat transfer plates, through the coupling holes and the coupling protrusions.

## Claims

1. A heat exchanger (30) for a ventilation system which includes an air exhaust duct (60) and an air supply duct (61) positioned at both ends of the heat exchanger (30) so as to discharge contaminated inside air to the outside and to introduce fresh outside air to the inside and which introduces outside air by cooling/heating the outside air by using cool/warm energy being likely to be lost when discharging the inside air, the heat exchanger (30) for performing heat exchange between the exhaust duct (60) and the air supply duct (61), comprising a first heat transfer plate (10);
and a second heat transfer plate (20), and
wherein a number of the first heat transfer plates (10) and a number of the second heat transfer plates (20) are stacked alternately so as to be correspondingly combined with each other,
wherein the first heat transfer plate (10), which includes a front side, a back side, two left sides respectively having a first sloping end and a second sloping end, and two right sides respectively having a first sloping end and a second sloping end,
wherein a first closing groove (13) formed between the horizontal edge protruding upward from a base level (100) and a projection (200) spaced apart from the horizontal edge, at a predetermined distance, and protruding upward from the horizontal edge at each of the first sloping ends of the left and right sides; and a second closing projection (14) spaced apart from the horizontal edge, at a predetermined distance, at each of the second sloping ends of the left and right sides and hollowed out downward from the base line (100); and
wherein the second heat transfer plate (20) which includes a front side, a back side, two left sides respectively having a first sloping end and a second sloping end, and two right sides respectively having a first sloping end and a second sloping end and which is correspondingly combined with the first heat transfer plate (10) on and/or under the first heat transfer plate (10), and
wherein a first closing projection (23) is formed at each of the first sloping ends of the left and right sides of the second heat transfer plate (20) and fitted into the first closing groove (13), to block a fluid flow passage of the cool air/hot air; and a second closing groove (24) is formed at each of the second sloping ends of the left and right sides of the second heat transfer plate (20) and correspondingly combined with the second closing projection (14), and
wherein the first heat transfer plate (10) and the second heat transfer plate (20) forms an inlet/outlet (50) for introducing/discharging the cold/hot air, at the sloping ends of the left and right sides where each second closing projection (14) is formed,
**characterized in that**
the first heat transfer plate (10) comprises a first combining projection (11) formed at each of edges of the front and back sides, the first combining projection (11) spaced apart from a horizontal edge, at a predetermined distance, and protruding upward from the base level (100) so as to be relatively higher than a projection (200), and a second combining projection (12) formed inward the first combining projection (11) and having a shape hollowed out downward from the base level (100), and that the second heat transfer plate (20) comprises a first combining groove (21) formed at each of edges of the front and back sides of the second heat transfer plate (20) and receiving each first combining projection (11) so as to be combined with each other, and a second combining groove (22) formed at each of the edges of the front and back sides of the second heat transfer plate (20) and corresponding to the second combining projection (12).

2. The heat exchanger according to claim 1, **characterized in that** the heat exchanger (30) further comprises a number of guide bars (40) for guiding a direction of the cold/hot air, the guide bars (40) formed on the top surface of the sides of each heat transfer plate where the cold/hot air is introduced/discharged in each of the first heat transfer plate (10) and the second heat transfer plate (20); and a number of irregular dimples (41) protruding upward and spaced apart from one another, the irregular dimples (41) formed on the surface of the middle part of each of the first heat transfer plate (10) and the second heat transfer plate (20).

3. The heat exchanger according to claim 1, **characterized in that** the heat exchanger (30) further comprises a number of coupling holes (70) bored on the first heat transfer plate (10) and spaced apart from one another;
a number of coupling protrusions (71) protruding upward on the second heat transfer plate (20), so as to respectively correspond to the coupling holes under and/or on the first heat transfer plate (10), each coupling protrusion (71) having its hollow inside; and a number of coupling bolts (72) respectively passing through the coupling holes (70) and the coupling protrusions (71), to fasten a number of the stacked first and second heat transfer plates (10) and (20) when the first heat transfer plates (10) and the second heat transfer plates (20) are correspondingly stacked.

## Patentansprüche

1. Wärmetauscher (30) für ein Lüftungssystem, das einen Luftausströmkanal (60) und einen Luftzuführungskanal (61) umfasst, die an beiden Enden des Wärmetauschers (30) angeordnet sind, um kontaminierte Luft im Inneren nach außen abzugeben und um frische Luft von außen in das Innere zu leiten und, um Luft von außen durch Kühlen/Erwärmen der Luft von außen unter Verwendung von Kühl-/Heizenergie, die aller Wahrscheinlichkeit nach verloren ginge, wenn die Luft aus dem Inneren entlassen wird, einzuleiten, wobei der Wärmetauscher (30) dazu dient, einen Wärmetausch zwischen dem Ausströmkanal (60) und dem Luftzuführungskanal (61) durchzuführen, aufweisend
eine erste Wärmeleitplatte (10);
und eine zweite Wärmeleitplatte (20), und wobei eine Anzahl von ersten Wärmeleitplatten (10) und eine Anzahl von zweiten Wärmeleitplatten (20) abwechselnd gestapelt sind derart, dass diese entsprechend miteinander zusammengefügt sind, wobei die erste Wärmeleitplatte (10), eine Vorderseite, eine Rückseite, zwei linke Seiten, die jeweils ein erstes geneigtes Ende und ein zweites geneigtes Ende aufweisen, und zwei rechte Seiten umfasst, die jeweils ein erstes geneigtes Ende und ein zweites geneigtes Ende aufweisen,
wobei eine erste Verschlussnut (13) zwischen der horizontalen Kante, die sich von einer Grundebene (100) nach oben erstreckt und einem Vorsprung (200), der von der horizontalen Kante beabstandet ist, in einem definierten Abstand ausgebildet ist und sich von der horizontalen Kante an jedem der ersten geneigten Enden der linken und rechten Seiten nach oben erstreckt; und wobei ein zweiter Verschlussvorsprung (14) von der horizontalen Kante in einem definierten Abstand an jedem der zweiten geneigten Enden der linken und rechten Seite beabstandet ist und sich von der Grundebene (100) nach unten öffnet; und
wobei die zweite Wärmeleitplatte (20), die eine Vorderseite, eine Rückseite, zwei linke Seiten, die jeweils ein erstes geneigtes Ende und ein zweites geneigtes Ende aufweisen, und zwei rechte Seiten umfasst, die jeweils ein erstes geneigtes Ende und ein zweites geneigtes Ende aufweisen, und das entsprechend mit der ersten Wärmeleitplatte (10) auf und/oder unterhalb der ersten Wärmeleitplatte (10) zusammengefügt ist, und
wobei ein erster Verschlussvorsprung (23) an jedem der ersten geneigten Enden der linken und rechten Seite der zweiten Wärmeleitplatte (20) ausgebildet und in die erste Verschlussnut (13) eingefügt ist, um eine Fluiddurchströmpassage für Kühlluft/erwärmte Luft zu blockieren; und wobei eine zweite Verschlussnut (24) an jedem der zweiten geneigten Enden der linken und rechten Seite der zweiten Wärmeleitplatte (20) ausgebildet und entsprechend mit dem zweiten Verschlussvorsprung (14) zusammengefügt ist, und
wobei die erste Wärmeleitplatte (10) und die zweite Wärmeleitplatte (20) einen Einlass/Auslass (50) zum Einleiten/Ableiten von Kühl-/erwärmter Luft an den geneigten Enden der linken und rechten Seiten ausbilden, wo jeweils der zweite Verschlussvorsprung (14) ausgebildet ist,
**dadurch gekennzeichnet, dass**
die erste Wärmeleitplatte (10) einen ersten Verbindungsvorsprung (11), der an jeder der Kanten der Vorder- und Rückseiten ausgebildet ist, wobei der erste Verbindungsvorsprung (11) von einer horizontalen Kante in einem definierten Abstand beabstandet ist und sich von der Grundebene (100) derart nach oben erstreckt, dass dieser etwas höher liegt als ein Vorsprung (200), und einen zweiten Verbindungsvorsprung (12) aufweist, der innerhalb des ersten Verbindungsvorsprungs (11) ausgebildet ist und eine Form aufweist, die sich von der Grundebene (100) nach unten öffnet, und dass die zweite Wärmeleitplatte (20) eine erste Verbindungsnut (21), die an jeder der Kanten der Vorder- und Rückseiten der zweiten Wärmeleitplatte (20) ausgebildet ist und jeweils den ersten Verbindungsvorsprung (11) aufnimmt, um so miteinander zusammengefügt zu werden, und eine zweite Verbindungsnut (22) aufweist, die an jeder der Kanten der Vorder- und Rückseiten der zweiten Wärmeleitplatte (20) ausgebildet ist und mit dem zweiten Verbindungsvorsprung (12) korespondiert.

2. Wärmetauscher nach Anspruch 1, **dadurch gekennzeichnet, dass** der Wärmetauscher (30) des weiteren eine Anzahl von Führungsstreben (40) zum Führen der Richtung der Kühl-/erwärmten Luft aufweist, wobei die Führungsstreben (40) auf den Oberflächen der Seiten von jeder Wärmeleitplatte ausgebildet sind, wo die Kühl-/erwärmte Luft sowohl in die erste Wärmeleitplatte (10) als auch in die zweite Wärmeleitplatte (20) eingeleitet bzw. aus diesen abgeleitet wird; und eine Anzahl von unregelmäßigen Erhöhungen (41) aufweist, die sich nach oben erstrecken und voneinander beabstandet sind, wobei die unregelmäßigen Erhöhungen (41) auf der Oberfläche des mittleren Abschnitts sowohl der ersten Wärmeleitplatte (10) als auch der zweiten Wärmeleitplatte (20) ausgebildet sind.

3. Wärmetauscher nach Anspruch 1, **dadurch gekennzeichnet, dass** der Wärmetauscher (30) des Weiteren eine Anzahl von Kupplungsöffnungen (70) aufweist, die in die erste Wärmeleitplatte (10) eingebracht und voneinander beabstandet sind;
wobei sich eine Anzahl von Kupplungsvorsprüngen (71) von der zweiten Wärmeleitplatte (20) nach oben erstrecken, so dass diese jeweils mit den Kupplungsöffnungen unterhalb und/oder auf der ersten Wärmeleitplatte (10) korrespondieren, wobei jeder Kupplungsvorsprung (71) nach innen hohl ausgebildet ist; und wobei eine Anzahl von Kupplungsbolzen (72) jeweils die Kupplungsöffnungen (70) und die Kupplungsvorsprünge (71) durchgreifen, um eine Anzahl von gestapelten ersten und zweiten Wärmeleitplatten (10) und (20) zu befestigen, wenn die ersten Wärmeleitplatten (10) und die zweiten Wärmeleitplatten (20) entsprechend gestapelt sind.

## Revendications

1. Echangeur thermique (30) pour un système de ventilation qui inclut un conduit d'évacuation d'air (60) et un conduit d'acheminement d'air (61) positionnés aux deux extrémités de l'échangeur thermique (30) de manière à évacuer de l'air intérieur contaminé vers l'extérieur et de manière à introduire de l'air frais extérieur vers l'intérieur et qui introduit de l'air extérieur en refroidissant/chauffant l'air extérieur en utilisant de l'énergie froide/chaude susceptible d'être perdue au moment de l'évacuation de l'air intérieur, l'échangeur thermique (30) étant destiné à réaliser un échange thermique entre le conduit d'évacuation (60) et le conduit d'acheminement d'air (61), comprenant une première plaque de transfert thermique (10),
et une deuxième plaque de transfert thermique (20), et
dans lequel un certain nombre des premières plaques de transfert thermique (10) et un certain nombre des deuxièmes plaques de transfert thermique (20) sont empilées de manière alternée de manière à être combinées en correspondance les unes avec les autres, dans lequel la première plaque de transfert thermique (10), qui inclut un côté avant, un côté arrière et deux côtés latéraux ayant respectivement une première extrémité inclinée et une deuxième extrémité inclinée, et deux angles droits ayant respectivement une première extrémité inclinée et une deuxième extrémité inclinée, dans lequel une première rainure de fermeture (13) formée entre le bord horizontal dépassant vers le haut par rapport à un niveau de base (100) et une protubérance (200) écartée par rapport au bord horizontal, à une distance prédéterminée, et dépassant vers le haut par rapport au bord horizontal au niveau de chacune des premières extrémités inclinées des côtés gauche et droit, et une deuxième protubérance de fermeture (14) écartée par rapport au bord horizontal, à une distance prédéterminée, au niveau de chacune des deuxièmes extrémités inclinées des côtés gauche et droit et creusée par rapport à la ligne de base (100), et
dans lequel la deuxième plaque de transfert thermique (20) qui inclut un côté avant, un côté arrière, deux côtés latéraux ayant respectivement une première extrémité inclinée et une deuxième extrémité inclinée, et deux angles droits ayant respectivement une première extrémité inclinée et une deuxième extrémité inclinée et qui est combinée en correspondance avec la première plaque de transfert thermique (10) sur et/ou sous la première plaque de transfert thermique (10), et
dans lequel une première protubérance de fermeture (23) est formée au niveau de chacune des premières extrémités inclinées des côtés gauche et droit de la deuxième plaque de transfert thermique (20) et reçue dans la première rainure de fermeture (13), pour bloquer un passage d'écoulement de fluide de l'air froid/l'air chaud, et une deuxième rainure de fermeture (24) est formée au niveau de chacune des deuxièmes extrémités inclinées des côtés gauche et droit de la deuxième plaque de transfert thermique (20) et combinée en correspondance avec la deuxième protubérance de fermeture (14), et
dans lequel la première plaque de transfert thermique (10) et la deuxième plaque de transfert thermique (20) forment une entrée/sortie (50) pour introduire/évacuer l'air froid/chaud, au niveau des extrémités inclinées des côtés gauche et droit où chaque deuxième protubérance de fermeture (14) est formée,
**caractérisé en ce que**
la première plaque de transfert thermique (10) comprend une première protubérance de combinaison (11) formée au niveau de chacun des bords des côtés avant et arrière, la première protubérance de combinaison (11) étant écartée par rapport à un bord horizontal, à une distance prédéterminée, et dépassant vers le haut par rapport au niveau de base (100) de manière à être relativement plus haute qu'une protubérance (200), et une deuxième protubérance de combinaison (12) formée vers l'intérieur de la première protubérance de combinaison (11) et ayant une forme creusée par rapport au niveau de base (100), et **en ce que** la deuxième plaque de transfert thermique (20) comprend une première rainure de combinaison (21) formée au niveau de chacun des bords des côtés avant et arrière de la deuxième plaque de transfert thermique (20) et recevant chaque première protubérance de combinaison (11) de manière à être combinées les unes avec les autres, et une deuxième rainure de combinaison (22) formée au niveau de chacun des bords des côtés avant et arrière de la deuxième plaque de transfert thermique (20) et correspondant à la deuxième protubérance de combinaison (12).

2. Echangeur thermique selon la revendication 1, **caractérisé en ce que** l'échangeur thermique (30) comprend en outre un certain nombre de barres de guidage (40) destinées à guider une direction de l'air froid/chaud, les barres de guidage (40) étant formées sur la surface supérieure des côtés de chaque plaque de transfert thermique où l'air froid/chaud est introduit/évacué dans chacune de la première plaque de transfert thermique (10) et de la deuxième plaque de transfert thermique (20), et un certain nombre d'alvéoles irrégulières (41) dépassant vers le haut et écartées les unes des autres, les alvéoles irrégulières étant formées sur la surface de la partie intermédiaire de chacune de la première plaque de transfert thermique (10) et de la deuxième plaque de transfert thermique (20).

3. Echangeur thermique selon la revendication 1, **caractérisé en ce que** l'échangeur thermique (30) comprend en outre un certain nombre de trous de couplage (70) percés sur la première plaque de transfert thermique (10) et écartés les uns des autres,
un certain nombre de protubérances de couplage (71) dépassant vers le haut sur la deuxième plaque de transfert thermique (20), de manière à correspondre respectivement aux trous de couplage sous et/ou sur la première plaque de transfert thermique (10), chaque protubérance de couplage (71) ayant son intérieur creux, et un certain nombre de boulons de couplage (72) traversant respectivement les trous de couplage (70) et les protubérances de couplage (71), pour fixer un certain nombre des premières et deuxièmes plaques de transfert thermique (10) et (20) lorsque les premières plaques de transfert thermique (10) et les deuxièmes plaques de transfert thermique (20) sont empilées en correspondance.
